# EUROPÄISCHE PATENTSCHRIFT

(11) **EP 4 212 399 B1**
(45) Veröffentlichungstag und Bekanntmachung des Hinweises auf die Patenterteilung: **30.10.2024**
(21) Anmeldenummer: 23150298.0
(22) Anmeldetag: 04.01.2023
(51) Int. Cl.: B60T 8/38, B60T 13/10

(54) **DRUCKLUFTBREMSANLAGE FÜR EIN FAHRZEUG UND VERFAHREN ZUM BETREIBEN DER DRUCKLUFTBREMSANLAGE**
COMPRESSED AIR BRAKE SYSTEM FOR A VEHICLE AND METHOD FOR OPERATING THE COMPRESSED AIR BRAKE SYSTEM
SYSTÈME DE FREINAGE À AIR COMPRIMÉ POUR UN VÉHICULE ET PROCÉDÉ DE FONCTIONNEMENT DU SYSTÈME DE FREINAGE À AIR COMPRIMÉ

(30) Priorität: 12.01.2022 DE 102022100611
(43) Veröffentlichungstag der Anmeldung: 19.07.2023
(73) Patentinhaber: KNORR-BREMSE Systeme für Schienenfahrzeuge GmbH, 80809 München (DE)
(72) Erfinder: HESSLING, Thomas, 80799 München (DE)

(56) Entgegenhaltungen:
- DE-A1- 10 245 916
- FR-A- 1 445 292
- FR-A1- 2 009 006
- RU-C1- 2 185 978

## Beschreibung

Die Erfindung betrifft eine Druckluftbremsanlage für ein Fahrzeug und ein Verfahren zum Betreiben der Druckluftbremsanlage, insbesondere eine Druckluftbremsanlage mit einem Membranventil.

Ein Einsatz von Membranventilen, insbesondere als ABS- oder Gleitschutzventile in Fahrzeugen, ist im Stand der Technik bekannt.

Ein erwünschtes schnelles und genaues Schaltverhalten der Membranventile ist jedoch nicht einfach erzielbar, da es aufgrund einer systembedingten Trägheit der Druckluftbremsanlage nur schwer möglich ist, das Membranventil für genauere Schaltzeiten und eine genauere Festlegung eines Ausgangsdrucks des Membranventils anzusteuern.

Das Dokument DE 102 45 916 A1 offenbart einen Bremsdruckmodulator mit den Merkmalen gemäß dem Oberbegriff von Anspruch 1. Der Bremsdruckmodulator legt einen Vorsteuerdruck an dem Membranventil an, indem entweder, im normalen Bremsbetrieb, die erste Ventileinrichtung oder, für einen Redundanzbetrieb, die zweite Ventileinrichtung mit einer jeweiligen Druckluftquelle verbunden wird.

Daher ergibt sich die der Erfindung zugrunde liegende Aufgabe, eine Druckluftbremsanlage für ein Fahrzeug derart weiterzubilden, dass genauere Schaltzeiten und eine genauere Festlegung eines Ausgangsdrucks eines Membranventils der Druckluftbremsanlage möglich sind.

Die Aufgabe wird durch eine Druckluftbremsanlage gemäß Anspruch 1 und ein Verfahren gemäß Anspruch 10 gelöst. Vorteilhafte Weiterentwicklungen sind in den abhängigen Ansprüchen enthalten.

Gemäß einem Aspekt der Erfindung hat eine Druckluftbremsanlage für ein Fahrzeug ein Membranventil und eine Vorsteuerschaltvorrichtung des Membranventils, wobei die Vorsteuerschaltvorrichtung eine erste Ventileinrichtung aufweist, die an einem ersten Anschluss mit einer ersten Druckluftquelle verbindbar ist und an einem zweiten Anschluss mit einem Vorsteuereingang des Membranventils verbunden ist, wobei die erste Ventileinrichtung dazu ausgebildet ist, ihren ersten Anschluss und ihren zweiten Anschluss zu verbinden und zu trennen, und die Vorsteuerschaltvorrichtung dazu ausgebildet ist, einen vorbestimmten Vorsteuerdruck an dem Vorsteuereingang bereitzustellen, und wobei die Vorsteuerschaltvorrichtung eine zweite Ventileinrichtung aufweist, die an einem ersten Anschluss mit einer zweiten Druckluftquelle verbunden ist und an einem zweiten Anschluss mit dem Vorsteuereingang verbunden ist.

In einer solchen Druckluftbremsanlage ist mittels dieser Vorsteuerschaltvorrichtung eine größere Variabilität der Ansteuerung hinsichtlich eines Druckverlaufs möglich. Durch die Verwendung der zweiten Ventileinrichtung kann beispielsweise ein Luftstrom zu dem Vorsteuereingang des Membranventils erhöht werden, um eine Reaktionszeit des Membranventils zu verringern ohne dass übermäßig große Ventile mit einem hohen Luftdurchsatz verwendet werden müssen.

Gemäß einer vorteilhaften Weiterentwicklung der Druckluftbremsanlage weist die erste Ventileinrichtung ein 3/2-Wege-Ventil auf.

Das 3/2-Wege-Ventil der ersten Ventileinrichtung ermöglicht es, den Vorsteuereingang des Membranventils mit einem vorgegebenen Druck zu beaufschlagen sowie den Vorsteuerdruck durch Entlüften über das 3/2-Wege-Ventil wieder zu verringern, um das Membranventil wunschgemäß anzusteuern.

In einer anderen vorteilhaften Weiterentwicklung der Druckluftbremsanlage weist die erste Ventileinrichtung ein 2/2-Wege-Ventil auf.

Der Einsatz eines solchen Ventils kann erfolgen, wenn beispielsweise die Möglichkeit besteht, Luft über eine Öffnung in der Membran des Membranventils abströmen zu lassen. Dadurch kann der Vorsteuerdruck verringert werden wenn das 2/2-Wege-Ventil geschlossen wird. In diesem Fall bietet das 2/2-Wege-Ventil eine kostengünstige und einfache Möglichkeit, das Membranventil anzusteuern.

Bei einer weiteren vorteilhaften Ausgestaltung der Druckluftbremsanlage weist die zweite Ventileinrichtung ein 2/2-Wege-Ventil auf.

Die zweite Ventileinrichtung mit dem 2/2-Wege-Ventil bietet eine kostengünstige Möglichkeit, einen Volumenstrom der Luft zu dem Vorsteuereingang des Membranventils zu erhöhen, um eine Reaktionszeit hinsichtlich des Schließens des Membranventils zu verringern.

Gemäß einer anderen vorteilhaften Ausgestaltung der Druckluftbremsanlage weist die zweite Ventileinrichtung ein 3/2-Wege-Ventil auf.

Durch den Einsatz des 3/2-Wege-Ventils der zweiten Ventileinrichtung kann der Vorsteuerdruck, verglichen mit einer bloßen Verwendung des 3/2-Wege-Ventils der ersten Ventileinrichtung oder des bloßen Abströmens der Luft über die Öffnung in der Membran schneller verringert werden, um so die Reaktionszeit des Membranventils beim Öffnen zu verkürzen, ohne dass übermäßig große Ventile mit einem hohen Luftdurchsatz verwendet werden müssen.

Entsprechend einer weiteren vorteilhaften Ausgestaltung der Druckluftbremsanlage ist sie dazu ausgebildet, für die erste Ventileinrichtung und die zweite Ventileinrichtung durch die erste und zweite Druckluftquelle gleiche Eingangsdrücke bereitzustellen.

Durch das Bereitstellen von gleichen Eingangsdrücken ist es nicht nötig, unterschiedliche Druckregler für die Vorsteuerschaltvorrichtung vorzusehen, wobei dennoch ein Luftstrom zu dem Vorsteuereingang erhöht werden kann, um eine Reaktionszeit des Membranventils zu verringern.

In einer anderen vorteilhaften Ausgestaltung der Druckluftbremsanlage ist sie dazu ausgebildet, für die erste und die zweite Ventileinrichtung durch die erste und zweite Druckluftquelle unterschiedliche Eingangsdrücke bereitzustellen.

Durch das Bereitstellen der unterschiedlichen Drücke besteht die Möglichkeit, in Abhängigkeit von dem momentanen Betriebszustand, ein unterschiedliches Verhalten des Membranventils zu erzielen.

In einer vorteilhaften Ausgestaltung der Druckluftbremsanlage ist ein Eingangsdruck der zweiten Ventileinrichtung größer als ein Eingangsdruck der ersten Ventileinrichtung.

Durch diese Eigenschaft ist es möglich, beispielsweise in einem sogenannten Normalbetrieb den Vorsteuereingang lediglich mit einem geringeren Druck durch die erste Ventileinrichtung zu beaufschlagen, jedoch unter bestimmten Bedingungen, bei denen eine kürzere Reaktionszeit des Membranventils erforderlich ist, einen höheren Vorsteuerdruck durch die zweite Ventileinrichtung bereitzustellen.

Bei einer weiteren vorteilhaften Ausgestaltung der Druckluftbremsanlage ist ein Eingang des Membranventils über eine Bremsleitung mit einem Bremszylinder so verbunden, dass das Membranventil dazu ausgebildet ist, den Bremszylinder über die Bremsleitung zu entlüften, und der erste Anschluss der ersten Ventileinrichtung ist mit der Bremsleitung verbunden.

Durch diese Ausgestaltung ist es möglich, ohne einen Einsatz von weiteren Komponenten zusätzlich den Druck in der Bremsleitung und daher in dem Bremszylinder zu erhöhen, um eine sehr genaue Bremswirkung einzustellen.

Gemäß einem weiteren Aspekt der Erfindung weist ein Verfahren zum Betreiben einer Druckluftbremsanlage die Schritte auf: Anlegen eines Vorsteuerdrucks an dem Vorsteuereingang des Membranventils mittels eines Öffnens der ersten Ventileinrichtung und mittels eines Öffnens der zweiten Ventileinrichtung wodurch das Membranventil geschlossen wird und Verringern des Vorsteuerdrucks mittels eines Absperrens der ersten Ventileinrichtung und mittels eines Absperrens der zweiten Ventileinrichtung wodurch das Membranventil geöffnet wird.

Durch diese Schritte ist es möglich, einen Luftstrom zu dem Vorsteuereingang des Membranventils zu erhöhen, um eine Reaktionszeit des Membranventils zu verringern, ohne dass übermäßig große Ventile mit einem hohen Luftdurchsatz verwendet werden müssen.

Entsprechend einer vorteilhaften Ausgestaltung des Verfahrens wird durch das Öffnen der zweiten Ventileinrichtung ein höherer Vorsteuerdruck als bei dem Öffnen der ersten Ventileinrichtung bereitgestellt.

Durch die Bereitstellung des höheren Vorsteuerdrucks kann ein rascheres Schließen des Membranventils erzielt werden, da bei einer identischen Membranfläche eine größere Kraft vorhanden ist, sodass notwendige Schaltdrücke schneller erreicht werden.

Bei einer weiteren vorteilhaften Ausgestaltung des Verfahrens wird die zweite Ventileinrichtung nur bei Vorliegen einer vorbestimmten Bedingung geöffnet.

Im Normalbetrieb wird der Vorsteuereingang lediglich mit dem geringeren Druck durch die erste Ventileinrichtung beaufschlagt, jedoch wird unter bestimmten Bedingungen, bei denen eine kürzere Reaktionszeit des Membranventils erforderlich ist, der höhere Vorsteuerdruck durch die zweite Ventileinrichtung bereitgestellt, so dass das Ventil schneller geschlossen werden kann.

In einer weiteren vorteilhaften Ausgestaltung des Verfahrens wird die zweite Ventileinrichtung vor der ersten Ventileinrichtung geschlossen.

Durch diese Eigenschaft ist es möglich, das Membranventil rasch zu schließen, jedoch, da die Ventileinrichtung, die einen höheren Vorsteuerdruck bereitstellt, geschlossen wird, eine Kraft, mit der die Membran an eine Anschlagfläche gepresst wird, zu verringern um eine Lebensdauer der Membran zu erhöhen.

Bei einer weiteren vorteilhaften Ausgestaltung des Verfahrens wird der größere Eingangsdruck sowohl in dem Vorsteuereingang als auch in der Bremsleitung und an dem Eingang des Membranventils bereitgestellt.

Durch eine solche Bereitstellung ist es möglich, ohne einen Einsatz von weiteren Komponenten auch den Druck in der Bremsleitung zu erhöhen, um eine sehr genaue Druckregelung und somit sehr genaue Bremswirkung einzustellen.

Nachverfolgend wird die Erfindung anhand von Ausführungsformen und Bezugnahme auf die beigefügte Zeichnung erläutert.

Insbesondere zeigt
- Fig. 1: einen Querschnitt eines Oberteils eines Membranventils;
- Fig. 2: einen Ausschnitt einer ersten Ausführungsform einer Druckluftbremsanlage mit einer Prinzipdarstellung des Membranventils und einer Vorsteuerschaltvorrichtung für das Membranventil; und
- Fig. 3: einen Ausschnitt einer zweiten Ausführungsform der Druckluftbremsanlage mit der Prinzipdarstellung des Membranventils und der Vorsteuerschaltvorrichtung für das Membranventil, die mit einer Bremsleitung eines Bremszylinders verbunden ist.

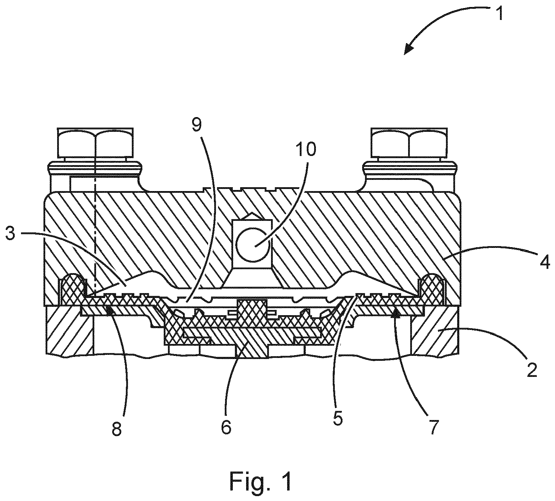

**Fig. 1** zeigt einen Querschnitt eines Oberteils eines Membranventils 1.

Das Membranventil 1 weist ein Ventilgehäuse 2 auf, das im Bereich einer Steuerdruckkammer 3 mit einem Gehäusedeckel 4 verbunden ist. Zwischen dem Ventilgehäuse 2 und dem Gehäusedeckel 4 ist eine Elastomermembran 5 zur Betätigung eines hiervon angetriebenen Verschlussglieds 6 angeordnet.

Auf der Seite der unteren Membranfläche 7 der Elastomermembran 5 ist eine ringartige Stützkontur 8 vorgesehen, die durch einen formschlüssig in das Ventilgehäuse 2 eingelegten Stützring 9 gebildet ist.

In dem Gehäusedeckel 4 ist ferner ein Vorsteuereingang 10 des Membranventils 1 zur Zuführung eines Steuerdrucks für das Membranventil 1 vorgesehen. Das Membranventil 1 kann in alternativen Ausführungsformen auch einen anderen Aufbau aufweisen, wobei die Funktionselemente, wie etwa die Elastomermembran 5 und das Verschlussglied, vorhanden sind und entsprechend funktionieren.

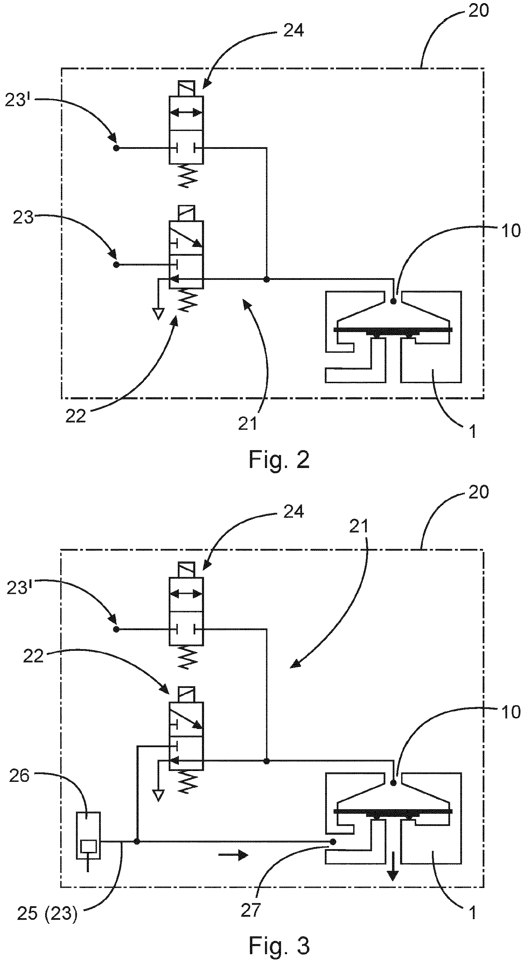

**Fig. 2** zeigt einen Ausschnitt einer ersten Ausführungsform einer Druckluftbremsanlage 20 mit einer Prinzipdarstellung des Membranventils 1 und einer Vorsteuerschaltvorrichtung 21 des Membranventils 1.

Die Vorsteuerschaltvorrichtung 21 weist eine erste Ventileinrichtung 22 und eine zweite Ventileinrichtung 24 auf. Die Vorsteuerschaltvorrichtung 21 ist dazu ausgebildet, einen vorbestimmten Vorsteuerdruck an dem Vorsteuereingang 10 bereitzustellen.

Die erste Ventileinrichtung 22 ist an einem ersten Anschluss mit einer ersten Druckluftquelle 23 verbunden und an einem zweiten Anschluss ist die erste Ventileinrichtung 22 mit dem Vorsteuereingang 10 des Membranventils 1 verbunden, wobei die erste Ventileinrichtung 22 dazu ausgebildet ist, den ersten Anschluss und den zweiten Anschluss zu verbinden und zu trennen. Die erste Ventileinrichtung 22 weist ein 3/2-Wege-Ventil auf. In einer alternativen Ausführungsform weist die erste Ventileinrichtung 22 ein 2/2-Wege-Ventil oder ein anderes geeignetes Ventil auf.

Die zweite Ventileinrichtung 24 ist an einem ersten Anschluss mit einer zweiten Druckluftquelle 23' verbunden und an einem zweiten Anschluss ist die zweite Ventileinrichtung 24 mit dem Vorsteuereingang 10 des Membranventils 1 und dem zweiten Anschluss der ersten Ventileinrichtung 22 verbunden. Die zweite Ventileinrichtung 24 weist ein 2/2-Wege-Ventil auf. In einer alternativen Ausführungsform weist die zweite Ventileinrichtung 24 ein 3/2-Wege-Ventil oder ein anderes geeignetes Ventil auf.

Die Druckluftbremsanlage 20 ist dazu ausgebildet, für die zweite Ventileinrichtung 24 durch die zweite Druckluftquelle 23' einen Eingangsdruck bereitzustellen, der größer als ein Eingangsdruck der ersten Ventileinrichtung 22 ist, der durch die erste Druckluftquelle 23 bereitgestellt wird. In dieser Ausführungsform beträgt der durch die erste Druckluftquelle 23 bereitgestellte Druck 4 bar und der durch die zweite Druckluftquelle 23' bereitgestellte Druck beträgt 7 bar. In alternativen Ausführungsformen können die Drücke auch andere Werte annehmen, der durch die erste Druckluftquelle 23 bereitgestellte Druck kann höher als der durch die zweite Druckluftquelle 23' bereitgestellte Druck sein, oder die durch die erste Druckluftquelle 23 und durch die zweite Druckluftquelle 23' bereitgestellten Drücke können gleich sein.

**Fig. 3** zeigt einen Ausschnitt einer zweiten Ausführungsform der Druckluftbremsanlage 20 mit der Prinzipdarstellung des Membranventils 1 und der Vorsteuerschaltvorrichtung 21 für das Membranventil 1, die mit einer Bremsleitung 25 eines Bremszylinders 26 verbunden ist.

Die zweite Ausführungsform unterscheidet sich von der ersten Ausführungsform darin, dass der erste Anschluss der ersten Ventileinrichtung 22 mit der Bremsleitung 25 verbunden ist. Durch die Bremsleitung 25 wird, wie durch Pfeile gezeigt ist, der Bremszylinder 26 entlüftet solange das Membranventil 1 geöffnet ist. Bei einem Vorliegen eines entsprechenden Drucks kann die Bremsleitung 25 als erste Druckquelle 23 wirken.

Außerdem besteht bei einem Bereitstellen eines größeren Drucks durch die zweite Druckquelle 23' die Möglichkeit, auch den Druck in der Bremsleitung 25 mittels der der ersten Ventileinrichtung 22 und der zweiten Ventileinrichtung 24 zu erhöhen, um eine sehr genaue Druckregelung in der Bremsleitung 25 zu ermöglichen.

Im Betrieb wird, wenn kein Vorsteuerdruck in der Steuerdruckkammer 3 vorhanden ist, die Elastomermembran 5 durch das Verschlussglied 6 nach oben gedrückt, sodass das Membranventil 1 geöffnet ist. Durch ein Einbringen des Vorsteuerdrucks über den Vorsteuereingang 10 in die Steuerdruckkammer 3 wird die Elastomermembran 5 nach unten gedrückt. Dabei wird das Membranventil 1 mittels des Verschlussglieds 6 geschlossen.

Das Membranventil 1 kann nur durch die erste Ventileinrichtung 22 angesteuert werden. Erfindungsgemäß wird jedoch das Membranventil 1 derart angesteuert, dass ein Vorsteuerdruck an dem Vorsteuereingang 10 des Membranventils 1 mittels eines Öffnens der ersten Ventileinrichtung 22 und mittels eines Öffnens der zweiten Ventileinrichtung 24 angelegt wird und dadurch das Membranventil 1 geschlossen wird. Bei Bedarf wird der Vorsteuerdruck mittels eines Absperrens der ersten Ventileinrichtung 22 und mittels eines Absperrens der zweiten Ventileinrichtung 24 verringert, wodurch das Membranventil 1 geöffnet wird. Durch das Absperren wird im Fall der 3/2-Wege-Ventile die Versorgung des Membranventils 1 mit Druckluft unterbrochen und die zu dem Vorsteuereingang 10 führende Leitung über das Ventil entlüftet.

Durch das Öffnen der zweiten Ventileinrichtung 24 wird ein höherer Vorsteuerdruck als beim Öffnen der ersten Ventileinrichtung 22 an dem Vorsteuereingang 10 bereitgestellt. Alternativ wird ein gleicher Vorsteuerdruck an dem Vorsteuereingang 10 bereitgestellt.

Die zweite Ventileinrichtung 24, die den höheren Vorsteuerdruck an dem Vorsteuereingang 10 bereitstellt, wird nur bei einem Vorliegen einer vorbestimmten Bedingung geöffnet. Beispielsweise wird bei dem Öffnen der ersten Ventileinrichtung 22 die zweite Ventileinrichtung 24 kurz geöffnet, um eine gewünschte kurze Reaktionszeit zum Schließen des Membranventils 1 zu erreichen, was bei Gleitschutzregelungen gewünscht sein kann. In dem Fall, in dem die kurze Reaktionszeit nicht notwendig ist, kann auf ein zeitgleiches Öffnen der zweiten Ventileinrichtung 24 verzichtet werden. Alternativ öffnet die zweite Ventileinrichtung 24 immer gleichzeitig mit der ersten Ventileinrichtung 22.

Die zweite Ventileinrichtung 24 wird vor der ersten Ventileinrichtung 22 geschlossen. Dadurch kann verhindert werden, dass die Membran 5 durch den durch die zweite Ventileinrichtung 24 aufgebrachten höheren Vorsteuerdruck mit großer Kraft auf die ringartige Stützkontur 8 angepresst wird wobei ein erhöhter Verschleiß der Membran 5 verhindert wird.

Wenn der erste Anschluss der ersten Ventileinrichtung 22 mit der Bremsleitung 25 verbunden ist, kann der durch die zweite Ventileinrichtung 24 bereitgestellte höhere Druck auch in der Bremsleitung 25 bereitgestellt werden. Durch diesen höheren Druck, der dann sowohl in der Bremsleitung 25 als auch in dem Vorsteuereingang 10 vorhanden ist, können der Druck in der Bremsleitung 25, und somit eine Bremswirkung sehr genau geregelt werden.

### Bezugszeichenliste

- 1: Membranventil
- 2: Ventilgehäuse
- 3: Steuerdruckkammer
- 4: Gehäusedeckel
- 5: Elastomermembran
- 6: Verschlussglied
- 7: untere Membranfläche
- 8: ringartige Stützkontur
- 9: Stützring
- 10: Vorsteuereingang
- 20: Druckluftbremsanlage
- 21: Vorsteuerschaltvorrichtung
- 22: erste Ventileinrichtung
- 23, 23': Druckluftquelle
- 24: zweite Ventileinrichtung
- 25: Bremsleitung
- 26: Bremszylinder
- 27: Eingang

## Patentansprüche

1. Druckluftbremsanlage (20) für ein Fahrzeug, mit einem Membranventil (1) und einer Vorsteuerschaltvorrichtung (21) des Membranventils (1), wobei die Vorsteuerschaltvorrichtung (21) aufweist:
eine erste Ventileinrichtung (22), die an einem ersten Anschluss der ersten Ventileinrichtung (22) mit einer ersten Druckluftquelle (23) verbindbar ist und an einem zweiten Anschluss der ersten Ventileinrichtung (22) mit einem Vorsteuereingang (10) des Membranventils (1) verbunden ist,
wobei die erste Ventileinrichtung (22) dazu ausgebildet ist, den ersten Anschluss der ersten Ventileinrichtung (22) und den zweiten Anschluss der ersten Ventileinrichtung (22) zu verbinden und zu trennen, und
die Vorsteuerschaltvorrichtung (21) dazu ausgebildet ist, einen vorbestimmten Vorsteuerdruck an dem Vorsteuereingang (10) bereitzustellen,
wobei
die Vorsteuerschaltvorrichtung (21) ferner eine zweite Ventileinrichtung (24) aufweist, die an einem ersten Anschluss der zweiten Ventileinrichtung (24) mit einer zweiten Druckluftquelle (23') verbunden ist und an einem zweiten Anschluss der zweiten Ventileinrichtung (24) mit dem zweiten Anschluss der ersten Ventileinrichtung (22) und mit dem Vorsteuereingang (10) verbunden ist,
**dadurch gekennzeichnet, dass**
die Vorsteuerschaltvorrichtung (21) dazu ausgebildet ist, mittels eines Öffnens der ersten Ventileinrichtung (22) und mittels eines Öffnens der zweiten Ventileinrichtung (24) den Vorsteuerdruck anzulegen, wodurch das Membranventil (1) geschlossen wird.

2. Druckluftbremsanlage (20) gemäß Anspruch 1, wobei
die erste Ventileinrichtung (22) ein 3/2-Wege-Ventil aufweist.

3. Druckluftbremsanlage (20) gemäß Anspruch 1, wobei
die erste Ventileinrichtung (22) ein 2/2-Wege-Ventil aufweist.

4. Druckluftbremsanlage (20) gemäß einem der vorangehenden Ansprüche, wobei die zweite Ventileinrichtung (24) ein 2/2-Wege-Ventil aufweist.

5. Druckluftbremsanlage (20) gemäß einem der Ansprüche 1 bis 3, wobei
die zweite Ventileinrichtung (24) ein 3/2-Wege-Ventil aufweist.

6. Druckluftbremsanlage (20) gemäß einem der vorangehenden Ansprüche, wobei
die Druckluftbremsanlage (20) dazu ausgebildet ist, für die erste Ventileinrichtung (22) und die zweite Ventileinrichtung (24) durch die erste und zweite Druckluftquelle (23, 23') gleiche Eingangsdrücke bereitzustellen

7. Druckluftbremsanlage (20) gemäß einem der Ansprüche 1 bis 5, wobei
die Druckluftbremsanlage (20) dazu ausgebildet ist, für die erste Ventileinrichtung (22) und die zweite Ventileinrichtung (24) durch die erste und zweite Druckluftquelle (23, 23') unterschiedliche Eingangsdrücke bereitzustellen.

8. Druckluftbremsanlage (20) gemäß Anspruch 7, wobei ein Eingangsdruck der zweiten Ventileinrichtung (24) größer als ein Eingangsdruck der ersten Ventileinrichtung (22) ist.

9. Druckluftbremsanlage (20) gemäß Anspruch 8, wobei
ein Eingang (27) des Membranventils (1) über eine Bremsleitung (25) mit einem Bremszylinder (26) so verbunden ist, dass das Membranventil (1) dazu ausgebildet ist, den Bremszylinder (26) über die Bremsleitung (25) zu entlüften, und
der erste Anschluss der ersten Ventileinrichtung (22) mit der Bremsleitung (25) verbunden ist.

10. Verfahren zum Betreiben einer Druckluftbremsanlage (20) gemäß einem der Ansprüche 1 bis 9 mit den Schritten:
Anlegen eines Vorsteuerdrucks an dem Vorsteuereingang (10) des Membranventils (1) mittels eines Öffnens der ersten Ventileinrichtung (22) und mittels eines Öffnens der zweiten Ventileinrichtung (24) wodurch das Membranventil (1) geschlossen wird; und
Verringern des Vorsteuerdrucks mittels eines Absperrens der ersten Ventileinrichtung (22) und mittels eines Absperrens der zweiten Ventileinrichtung (24) wodurch das Membranventil (1) geöffnet wird.

11. Verfahren gemäß Anspruch 10, wobei
durch das Öffnen der zweiten Ventileinrichtung (24) ein höherer Vorsteuerdruck als bei beim Öffnen der ersten Ventileinrichtung (22) bereitgestellt wird.

12. Verfahren gemäß Anspruch 10 oder 11, wobei
die zweite Ventileinrichtung (24) nur bei Vorliegen einer vorbestimmten Bedingung geöffnet wird.

13. Verfahren gemäß Anspruch 11 oder 12, wobei
die zweite Ventileinrichtung (24) vor der ersten Ventileinrichtung (22) geschlossen wird.

14. Verfahren gemäß einem der Ansprüche 10 bis 13 mit einer Druckluftversorgungsanlage gemäß Anspruch 9, wobei
der größere Eingangsdruck sowohl in dem Vorsteuereingang (10) als auch in der Bremsleitung (25) und an dem Bremseingang (27) des Membranventils (1) bereitgestellt wird.

## Claims

1. Compressed air brake system (20) for a vehicle, with a membrane valve (1) and a pilot switching device (21) of the membrane valve (1), wherein the pilot switching device (21) comprises:
a first valve apparatus (22) which can be connected at a first terminal of the first valve apparatus (22) with a first compressed air source (23) and which is connected at a second terminal of the first valve apparatus (22) with a pilot input (10) of the membrane valve (1),
wherein the first valve apparatus (22) is configured to connect and to disconnect the first terminal of the first valve apparatus (22) and the second terminal of the first valve apparatus (22), and
the pilot switching device (21) is configured to provide a predetermined pilot pressure at the pilot input (10),
wherein
the pilot switching device (21) comprises furthermore a second valve apparatus (24) which is connected at a first terminal of the second valve apparatus (24) with a second compressed air source (23') and which is connected at a second terminal of the second valve apparatus (24) with the second terminal of the first valve apparatus (22) and with the pilot input (10),
**characterized in that**
the pilot switching device (21) is configured, by means of an opening of the first valve apparatus (22) and by means of an opening of the second valve apparatus (24), to apply the pilot pressure, whereby the membrane valve (1) is closed.

2. Compressed air brake system (20) according to claim 1, wherein
the first valve apparatus (22) has a 3/2 way valve.

3. Compressed air brake system (20) according to claim 1, wherein
the first valve apparatus (22) has a 2/2 way valve.

4. Compressed air brake system (20) according to any of the preceding claims, wherein
the second valve apparatus (24) comprises a 2/2 way valve.

5. Compressed air brake system (20) according to any of claims 1 to 3, wherein the second valve apparatus (24) comprises a 3/2 way valve.

6. Compressed air brake system (20) according to any of the preceding claims, wherein
the compressed air brake system (20) is configured to provide identical input pressures for the first valve apparatus (22) and the second valve apparatus (24) by way of the first and second compressed air sources (23, 23').

7. Compressed air brake system (20) according to any of claims 1 to 5, wherein
the compressed air brake system (20) is configured to provide different input pressures for the first valve apparatus (22) and the second valve apparatus (24) by way of the first and second compressed air sources (23, 23').

8. Compressed air brake system (20) according to claim 7, wherein an input pressure of the second valve apparatus (24) is greater than an input pressure of the first valve apparatus (22).

9. Compressed air brake system (20) according to claim 8, wherein
an input (27) of the membrane valve (1) via a brake line (25) is connected with a brake cylinder (26) such that the membrane valve (1) is configured to vent the brake cylinder (26) via the brake line (25), and
the first terminal of the first valve apparatus (22) is connected with the brake line (25).

10. Method for operating a compressed air brake system (20) according to any of claims 1 to 9, with the steps:
applying a pilot pressure at the pilot input (10) of the membrane valve (1) by means of an opening of the first valve apparatus (22) and by means of an opening of the second valve apparatus (24), whereby the membrane valve (1) is closed; and
reducing the pilot pressure by means of a shutting of the first valve apparatus (22) and by means of a shutting of the second valve apparatus (24), whereby the membrane valve (1) is opened.

11. Method according to claim 10, wherein
through the opening of the second valve apparatus (24) a higher pilot pressure is provided than when opening the first valve apparatus (22).

12. Method according to claim 10 or 11, wherein
the second valve apparatus (24) is opened only when a predetermined condition is met.

13. Method according to claim 11 or 12, wherein
the second valve apparatus (24) is closed before the first valve apparatus (22).

14. Method according to any of claims 10 to 13 with a compressed air brake system according to claim 9, wherein
the higher input pressure is provided both in the pilot input (10) and in the brake line (25) and at the brake input (27) of the membrane valve (1).

## Revendications

1. Système de freinage à air comprimé (20) pour un véhicule, avec une soupape à membrane (1) et un dispositif de commutation de pilotage (21) de la soupape à membrane (1), dans lequel le dispositif de commutation de pilotage (21) présente :
un premier appareil de soupape (22) qui peut être connecté à une première source d'air comprimé (23) au niveau d'un premier raccord du premier appareil de soupape (22) et qui est connecté à une entrée de pilotage (10) de la soupape à membrane (1) au niveau d'un second raccord du premier appareil de soupape (22),
dans lequel le premier appareil de soupape (22) est conçu pour connecter et séparer le premier raccord du premier appareil de soupape (22) et le second raccord du premier appareil de soupape (22), et
le dispositif de commutation de pilotage (21) est conçu pour fournir une pression de pilotage prédéterminée au niveau de l'entrée de pilotage (10),
dans lequel
le dispositif de commutation de pilotage (21) présente en outre un second appareil de soupape (24) qui est connecté à une seconde source d'air comprimé (23') au niveau d'un premier raccord du second appareil de soupape (24) et qui est connecté au second raccord du premier appareil de soupape (22) et à l'entrée de pilotage (10) au niveau d'un second raccord du second appareil de soupape (24),
**caractérisé en ce que**
le dispositif de commutation de pilotage (21) est conçu pour appliquer la pression de pilotage au moyen d'une ouverture du premier appareil de soupape (22) et au moyen d'une ouverture du second appareil de soupape (24), moyennant quoi la soupape à membrane (1) est fermée.

2. Système de freinage à air comprimé (20) selon la revendication 1, dans lequel le premier appareil de soupape (22) présente une soupape à 3/2 voies.

3. Système de freinage à air comprimé (20) selon la revendication 1, dans lequel le premier appareil de soupape (22) présente une soupape à 2/2 voies.

4. Système de freinage à air comprimé (20) selon l'une quelconque des revendications précédentes, dans lequel
le second appareil de soupape (24) présente une soupape à 2/2 voies.

5. Système de freinage à air comprimé (20) selon l'une quelconque des revendications 1 à 3, dans lequel
le second appareil de soupape (24) présente une soupape à 3/2 voies.

6. Système de freinage à air comprimé (20) selon l'une quelconque des revendications précédentes, dans lequel
le système de freinage à air comprimé (20) est conçu pour fournir des pressions d'entrée identiques pour le premier appareil de soupape (22) et le second appareil de soupape (24) par la première et la seconde source d'air comprimé (23, 23').

7. Système de freinage à air comprimé (20) selon l'une quelconque des revendications 1 à 5, dans lequel
le système de freinage à air comprimé (20) est conçu pour fournir des pressions d'entrée différentes pour le premier appareil de soupape (22) et le second appareil de soupape (24) par la première et la seconde source d'air comprimé (23, 23').

8. Système de freinage à air comprimé (20) selon la revendication 7, dans lequel une pression d'entrée du second appareil de soupape (24) est supérieure à une pression d'entrée du premier appareil de soupape (22).

9. Système de freinage à air comprimé (20) selon la revendication 8, dans lequel
une entrée (27) de la soupape à membrane (1) est connectée à un cylindre de frein (26) par l'intermédiaire d'une conduite de frein (25), de sorte que la soupape à membrane (1) soit conçue pour purger le cylindre de frein (26) par l'intermédiaire de la conduite de frein (25), et
le premier raccord du premier appareil de soupape (22) est connecté à la conduite de frein (25).

10. Procédé de fonctionnement d'un système de freinage à air comprimé (20) selon l'une quelconque des revendications 1 à 9, avec les étapes consistant à :
appliquer une pression de pilotage à l'entrée de pilotage (10) de la soupape à membrane (1) au moyen d'une ouverture du premier appareil de soupape (22) et au moyen d'une ouverture du second appareil de soupape (24), moyennant quoi la soupape à membrane (1) est fermée ; et
réduire la pression de pilotage au moyen d'une coupure du premier appareil de soupape (22) et au moyen d'une coupure du second appareil de soupape (24), moyennant quoi la soupape à membrane (1) est ouverte.

11. Procédé selon la revendication 10, dans lequel
l'ouverture du second appareil de soupape (24) fournit une pression de pilotage supérieure à celle fournie lors de l'ouverture du premier appareil de soupape (22).

12. Procédé selon la revendication 10 ou 11, dans lequel
le second appareil de soupape (24) est ouvert uniquement en présence d'une condition prédéterminée.

13. Procédé selon la revendication 11 ou 12, dans lequel
le second appareil de soupape (24) est fermé avant le premier appareil de soupape (22).

14. Procédé selon l'une quelconque des revendications 10 à 13 avec un système d'alimentation en air comprimé selon la revendication 9, dans lequel
la pression d'entrée plus élevée est fournie aussi bien dans l'entrée de pilotage (10) que dans la conduite de freinage (25) et au niveau de l'entrée de frein (27) de la soupape à membrane (1).
